(19) Europäisches Patentamt
European Patent Office
Office européen des brevets

(11) **EP 4 478 277 A1**

(12) **EUROPEAN PATENT APPLICATION**
published in accordance with Art. 153(4) EPC

(43) Date of publication:
**18.12.2024 Bulletin 2024/51**

(21) Application number: **22932608.7**

(22) Date of filing: **23.03.2022**

(51) International Patent Classification (IPC):
**G06T 5/00** (2024.01)

(52) Cooperative Patent Classification (CPC):
**H04N 1/387; H04N 1/6005; H04N 23/617;
H04N 23/81; H04N 23/85; H04N 25/61**

(86) International application number:
**PCT/CN2022/082406**

(87) International publication number:
**WO 2023/178539 (28.09.2023 Gazette 2023/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventor: **WANG, Wei
Shenzhen, Guangdong 518129 (CN)**

(74) Representative: **Maiwald GmbH
Engineering
Elisenhof
Elisenstrasse 3
80335 München (DE)**

(54) **IMAGE PROCESSING METHOD AND DEVICE**

(57) Embodiments of this application provide an image processing method and apparatus. The method includes: obtaining a first YUV image; obtaining a YUV mapping relationship, where the YUV mapping relationship indicates a location mapping relationship between a pixel in an initial YUV image and each pixel in a target YUV image, and the target YUV image is an image obtained by undistorting the initial YUV image; and obtaining a second YUV image based on the YUV mapping relationship and the first YUV image. According to the image processing method provided in embodiments of this application, time for an undistortion process can be reduced.

```
┌─────────────────────────────────────────────────────────┐
│           S401: Obtain a first YUV image                │
└─────────────────────────────────────────────────────────┘
                           │
                           ▼
┌─────────────────────────────────────────────────────────┐
│ S402: Obtain a YUV mapping relationship, where the YUV   │
│ mapping relationship indicates a location mapping        │
│ relationship between a pixel in an initial YUV image     │
│ and each pixel in a target YUV image, and the target     │
│ YUV image is an image obtained by undistorting the       │
│ initial YUV image                                        │
└─────────────────────────────────────────────────────────┘
                           │
                           ▼
┌─────────────────────────────────────────────────────────┐
│ S403: Obtain a second YUV image based on the YUV         │
│ mapping relationship and the first YUV image             │
└─────────────────────────────────────────────────────────┘
```

FIG. 4

**Description**

**TECHNICAL FIELD**

Embodiments of this application relate to the field of intelligent automobile technologies, and in particular, to an image processing method and apparatus.

**BACKGROUND**

In recent years, with rapid development of visual technologies, various types of camera sensors, such as fisheye cameras, hawkeye cameras, or monocular or binocular cameras, are applied to autonomous driving devices. An autonomous driving device may process, by using a computing platform according to a processing algorithm, for example, machine learning, an image acquired by a camera sensor, for further decision-making. However, the image obtained by using the camera sensor usually has a specific degree of distortion. In this case, if the distorted image is directly used as an input of the processing algorithm, a processing result of the processing algorithm may be affected. Therefore, the computing platform usually undistorts, or corrects, the distorted image first, and then uses an undistorted image as an input of the processing algorithm.

At present, it takes a relatively long time for a computing platform to undistort a YUV-format image after the image is obtained by using a camera.

With extensive application of visual technologies in different fields, how to effectively reduce time for undistorting an image becomes an urgent technical problem to be resolved.

**SUMMARY**

Embodiments of this application provide an image processing method and apparatus, to reduce time for an undistortion process.

According to a first aspect, an embodiment of this application provides an image processing method, including: obtaining a first YUV image; obtaining a YUV mapping relationship, where the YUV mapping relationship indicates a location mapping relationship between a pixel in an initial YUV image and each pixel in a target YUV image, and the target YUV image is an image obtained by undistorting the initial YUV image; and obtaining a second YUV image based on the YUV mapping relationship and the first YUV image.

According to the image processing method provided in this embodiment of this application, because the YUV mapping relationship indicates the location mapping relationship between each pixel in the target YUV image and the pixel in the initial YUV image, after the first YUV image is obtained, an undistortion operation can be directly performed on the first YUV image based on the YUV mapping relationship, and there is no need to convert the first YUV image into an RGB image at first and then undistort the RGB image based on the RGB mapping relationship. Therefore, time for the undistortion process can be reduced. In addition, even for a YUV image and an RGB image of a same size, because data used for the YUV image is less than data used for the RGB image, directly undistorting the YUV image can further reduce time for the undistortion process. It can be understood that, when more YUV images need to be undistorted, time for the undistortion process is more significantly reduced.

With reference to the first aspect, in a possible implementation, the obtaining a YUV mapping relationship includes: obtaining an RGB mapping relationship, where the RGB mapping relationship indicates a location mapping relationship between a pixel in an initial RGB image and each pixel in a target RGB image, the initial RGB image is an image obtained by converting the initial YUV image into an RGB image, the target RGB image is an image obtained by undistorting the initial RGB image, and a size of the target RGB image is equal to a size of the target YUV image; and determining the YUV mapping relationship based on the RGB mapping relationship.

With reference to the first aspect, in a possible implementation, the determining the YUV mapping relationship based on the RGB mapping relationship includes: determining a first target mapping relationship based on the RGB mapping relationship, where the first target mapping relationship indicates a location, in a Y-channel image corresponding to the initial YUV image, of each pixel in the target YUV image; determining a second target mapping relationship based on the RGB mapping relationship, where the second target mapping relationship indicates a location, in a U-channel image corresponding to the initial YUV image, of each pixel in the target image; and determining a third target mapping relationship based on the RGB mapping relationship, where the third target mapping relationship indicates a location, in a V-channel image corresponding to the initial YUV image, of each pixel in the target image; and correspondingly, the obtaining a second YUV image based on the YUV mapping relationship and the first YUV image includes: determining a pixel value of each pixel in the second YUV image based on a pixel value of each pixel at a location in a Y-channel image corresponding to the first YUV image, a pixel value of each pixel at a location in a U-channel image corresponding to the first YUV image, and a pixel value of each pixel at a location in a V-channel image corresponding to the first YUV image.

In this implementation, the first target mapping relationship that indicates the location, in the Y-channel image corresponding to the initial YUV image, of each pixel in the target YUV image, the second target mapping relationship that indicates the location, in the U-channel image corresponding to the initial YUV image, of each pixel in the target image; and the third target mapping relationship that indicates the location, in the V-channel image corresponding to the initial YUV image, of each pixel in the target image can be determined separately based on the RGB mapping relationship. It can be understood that, after the location, in the Y-channel image corresponding to the initial YUV image, the location, in the U-channel image corresponding to the initial YUV image, and the location, in the V-channel image corresponding to the initial YUV image, of each pixel in the target image are determined, a pixel value of each pixel at the location in the Y-channel image corresponding to the initial YUV image, a pixel value at the location in the U-channel image corresponding to the initial YUV image, and a pixel value at the location in the V-channel image corresponding to the initial YUV image can be obtained separately. Further, a pixel value corresponding to each pixel in the target image can be obtained based on the pixel value at the location in the Y-channel image, the pixel value at the location in the U-channel image, and the pixel value at the location in the V-channel image.

With reference to the first aspect, in a possible implementation, the first target mapping relationship is the same as the RGB mapping relationship; correspondingly, the determining a second target mapping relationship based on the RGB mapping relationship includes: determining, based on the RGB mapping relationship, a horizontal coordinate value and a vertical coordinate value, in the U-channel image corresponding to the initial YUV image, of a first pixel in the target YUV image, where the first pixel is any pixel in all pixels; and correspondingly, the determining a third target mapping relationship based on the RGB mapping relationship includes: determining, based on the RGB mapping relationship, a horizontal coordinate value and a vertical coordinate value, of the first pixel, in the V-channel image corresponding to the initial YUV image.

In this implementation, the horizontal coordinate value and the vertical coordinate value, in the U-channel image corresponding to the initial YUV image, of the first pixel in the target YUV image, and the horizontal coordinate value and the vertical coordinate value, in the V-channel image corresponding to the initial YUV image, of the first pixel may be obtained separately based on the RGB mapping relationship, to determine a location in the U-channel image and a location in the V-channel image that are of the first pixel.

With reference to the first aspect, in a possible implementation, a sampling frequency of a Y-component, a sampling frequency of a U-component, and a sampling frequency of a V-component that are of the first YUV image satisfy a relationship of 4:2:0, and a manner of storing the first YUV image is planar storage.

With reference to the first aspect, in a possible implementation, the determining a horizontal coordinate value and a vertical coordinate value, in the U-channel image corresponding to the initial YUV image, of a first pixel in the target YUV image includes: determining, according to a formula $U_x = \dfrac{temp1}{4}/2$, the horizontal coordinate value, of the first pixel, in the U-channel image corresponding to the initial YUV image, where $temp1$ represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; and

determining, according to a formula $U_y = src_h + \dfrac{src_h}{4}*k$, the vertical coordinate value, of the first pixel, in the U-channel image corresponding to the initial YUV image, where $src_h$ represents a height of the initial YUV image, k represents a ratio, $k = \dfrac{temp2}{4}/src_h$, and $tempi$ represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and correspondingly, the determining a horizontal coordinate value and a vertical coordinate value, of the first pixel, in the V-channel image corresponding to the initial YUV image includes: determining, according to a formula $V_x = \dfrac{temp1}{4}/2$, the horizontal coordinate value, of the first pixel, in the V-channel image corresponding to the first image; and determining, according to a formula $V_y = src_h * \dfrac{5}{4} + \dfrac{src_h}{4}*k$, the vertical coordinate value, of the first pixel, in the V-channel image corresponding to the first image.

With reference to the first aspect, in a possible implementation, a sampling frequency of a Y-component, a sampling frequency of a U-component, and a sampling frequency of a V-component that are of the first YUV image satisfy a relationship of 4:2:0, and a manner of storing the first YUV image is packed storage.

With reference to the first aspect, in a possible implementation, the determining a horizontal coordinate value and a vertical coordinate value, in the U-channel image corresponding to the initial YUV image, of a first pixel in the target YUV image includes: determining, according to a formula

$$U_x = \frac{temp1}{4}$$

, the horizontal coordinate value, of the first pixel, in the U-channel image corresponding to the initial YUV image, where *temp*1 represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; and

determining, according to a formula

$$U_y = src_h + \frac{src_h}{2} * k$$

, the vertical coordinate value, of the first pixel, in the U-channel image corresponding to the initial YUV image, where $src_h$ represents a height of the initial YUV image, k represents a ratio,

$$k = \frac{temp2}{4} / src_h$$

, and *tempi* represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and correspondingly, the determining a horizontal coordinate value and a vertical coordinate value, of the first pixel, in the V-channel image corresponding to the initial YUV image includes: determining, according to a formula $V_x = U_x + 1$, the horizontal coordinate value, of the first pixel, in the V-channel image corresponding to the initial YUV image; and

determining, according to a formula

$$V_y = src_h + \frac{src_h}{2} * k$$

, the vertical coordinate value, of the first pixel, in the V-channel image corresponding to the initial YUV image.

According to a second aspect, this application provides an image processing apparatus. The apparatus includes: an obtaining module, configured to: obtain a first YUV image, and obtain a YUV mapping relationship, where the YUV mapping relationship indicates a location mapping relationship between a pixel in an initial YUV image and each pixel in a target YUV image, and the target YUV image is an image obtained by undistorting the initial YUV image; and a processing module, configured to obtain a second YUV image based on the YUV mapping relationship and the first YUV image.

With reference to the second aspect, in a possible implementation, the obtaining module is further configured to obtain an RGB mapping relationship, where the RGB mapping relationship indicates a location mapping relationship between a pixel in an initial RGB image and each pixel in a target RGB image, the initial RGB image is an image obtained by converting the initial YUV image into an RGB image, the target RGB image is an image obtained by undistorting the initial RGB image, and a size of the target RGB image is equal to a size of the target YUV image; and the processing module is further configured to determine the YUV mapping relationship based on the RGB mapping relationship.

In a possible implementation, the processing module is further configured to: determine a first target mapping relationship based on the RGB mapping relationship, where the first target mapping relationship indicates a location, in a Y-channel image corresponding to the initial YUV image, of each pixel in the target YUV image; determine a second target mapping relationship based on the RGB mapping relationship, where the second target mapping relationship indicates a location, in a U-channel image corresponding to the initial YUV image, of each pixel in the target image; and determine a third target mapping relationship based on the RGB mapping relationship, where the third target mapping relationship indicates a location, in a V-channel image corresponding to the initial YUV image, of each pixel in the target image; and correspondingly, the processing module is further configured to determine a pixel value of each pixel in the second YUV image based on a pixel value of each pixel at a location in a Y-channel image corresponding to the first YUV image, a pixel value of each pixel at a location in a U-channel image corresponding to the first YUV image, and a pixel value of each pixel at a location in a V-channel image corresponding to the first YUV image.

In a possible implementation, the first target mapping relationship is the same as the RGB mapping relationship; and correspondingly, the processing module is further configured to: determine, based on the RGB mapping relationship, a horizontal coordinate value and a vertical coordinate value, in the U-channel image corresponding to the initial YUV image, of a first pixel in the target YUV image, where the first pixel is any pixel in all pixels; and determine, based on the RGB mapping relationship, a horizontal coordinate value and a vertical coordinate value, of the first pixel, in the V-channel image corresponding to the initial YUV image.

In a possible implementation, a sampling frequency of a Y-component, a sampling frequency of a U-component, and a sampling frequency of a V-component that are of the first YUV image satisfy a relationship of 4:2:0, and a manner of storing the first YUV image is planar storage.

In a possible implementation, the processing module is further configured to: determine, according to a formula

$$U_x = \frac{temp1}{4}/2$$

, the horizontal coordinate value, of the first pixel, in the U-channel image corresponding to the initial YUV image, where *temp*1 represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; and determine, according to a formula

$$U_y = src_h + \frac{src_h}{4}*k$$

, the vertical coordinate value, of the first pixel, in the U-channel image corresponding to the initial YUV image, where $src_h$ represents a height of the initial YUV image, k represents a ratio, $k = \frac{temp2}{4}/src_h$ , and *tempi* represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and correspondingly, the processing module is further configured to: determine, according to a formula

$$V_x = \frac{temp1}{4}/2$$

, the horizontal coordinate value, of the first pixel, in the V-channel image corresponding to the first image; and determine, according to a formula

$$V_y = src_h*\frac{5}{4}+\frac{src_h}{4}*k$$

, the vertical coordinate value, of the first pixel, in the V-channel image corresponding to the first image.

In a possible implementation, a sampling frequency of a Y-component, a sampling frequency of a U-component, and a sampling frequency of a V-component that are of the first YUV image satisfy a relationship of 4:2:0, and a manner of storing the first YUV image is packed storage.

In a possible implementation, the processing module is further configured to: determine, according to a formula

$$U_x = \frac{temp1}{4}$$

, the horizontal coordinate value, of the first pixel, in the U-channel image corresponding to the initial YUV image, where *temp*1 represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; and determine, according to a formula

$$U_y = src_h + \frac{src_h}{2}*k$$

, the vertical coordinate value, of the first pixel, in the U-channel image corresponding to the initial YUV image, where $src_h$ represents a height of the initial YUV image, k represents a ratio, $k = \frac{temp2}{4}/src_h$ , and *tempi* represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and correspondingly, the processing module is further configured to: determine, according to a formula $V_x = U_x + 1$, the horizontal coordinate value, of the first pixel, in the V-channel image corresponding to the initial YUV image; and determine, according to a formula $$V_y = src_h + \frac{src_h}{2}*k$$ , the vertical coordinate value, of the first pixel, in the V-channel image corresponding to the initial YUV image.

According to a third aspect, this application provides a computing platform. The computing platform includes the apparatus according to the second aspect or any one of the possible implementations of the second aspect.

According to a fourth aspect, this application provides a mobile device. The mobile device includes the computing platform according to the third aspect.

With reference to the fourth aspect, in a possible implementation, the mobile device includes an autonomous vehicle.

According to a fifth aspect, this application provides an image processing apparatus, including a memory and a processor. The memory is configured to store program instructions, and the processor is configured to invoke the program instructions in the memory to perform the image processing method according to the first aspect or any one of the possible implementations of the first aspect.

According to a sixth aspect, this application provides a chip, including at least one processor and a communications interface. The communications interface and the at least one processor are interconnected through a line, and the at least one processor is configured to run a computer program or instructions, to perform the image processing method according to the first aspect or any one of the possible implementations of the first aspect.

According to a seventh aspect, this application provides a computer-readable medium. The computer-readable medium stores program code to be executed by a device, and the program code is used for performing the image processing method according to the first aspect or any one of the possible implementations of the first aspect.

According to an eighth aspect, this application provides a computer program product including instructions. The computer program product includes computer program code. When the computer program code is run on a computer, the computer is enabled to perform the image processing method according to the first aspect or any one of the possible implementations of the first aspect.

## BRIEF DESCRIPTION OF DRAWINGS

FIG. 1 is a schematic diagram of structures of YUV images corresponding to three sampling manners according to this application;

FIG. 2 is a schematic diagram of a structure of an image processing system according to this application;

FIG. 3 is a schematic diagram of a distorted image according to this application;

FIG. 4 is a schematic flowchart of an image processing method according to this application;

FIG. 5 is a schematic diagram of a structure when a 4×4 colored image is stored as an RGB image according to this application;

FIG. 6 is a schematic diagram of a structure when a 4×4 colored image is stored as a YUV image according to this application;

FIG. 7 is a schematic diagram of a structure of a bilinear interpolation according to this application;

FIG. 8 is a schematic flowchart of an image processing apparatus according to this application; and

FIG. 9 is a schematic flowchart of an image processing apparatus according to this application.

## DESCRIPTION OF EMBODIMENTS

To make the objectives, technical solutions, and advantages of this application clearer, the technical solutions of this application are described clearly and completely below with reference to specific embodiments and corresponding accompanying drawings in this application. Clearly, the described embodiments are merely some of rather than all embodiments of this application. Based on embodiments of this application, all other embodiments obtained by a person of ordinary skill in the art without creative efforts shall fall within the protection scope of this application.

For ease of understanding, related terms used in this application are described at first.

1. Distortion

Essentially, distortion means that an optical system has different magnifications on pixels in different fields of view due to different lens diopters and diaphragm locations. Camera lens distortion can be classified into pincushion distortion, barrel distortion, and linear distortion.

Pincushion distortion is also referred to as positive deformation, means that in a field of view, a magnification in an edge area is far greater than a magnification in a central area of an optic axis, and is usually used in a telephoto lens.

Barrel distortion is the opposite of the pincushion distortion, means that in a field of view, a magnification in a central area of an optic axis is far greater than a magnification in an edge area, and is usually used in a wide-angle lens and a fisheye lens.

Linear distortion means that an optical axis is not orthogonal to a vertical plane of an object, for example, a building captured by a camera, and a far-end side and a near-end side that should be parallel converge by different angles and result in distortion. This type of distortion is essentially a perspective transformation. That is, any lens has similar distortion at a specific angle.

2. RGB image

An RGB image is an image represented quantitatively based on luminance of three primary colors, that is, red (R), green (G), and blue (B). R, G, and B are three base colors. Various colors can be made by adding these colors in different proportions. In the RGB image, each pixel has three base colors, that is, red, green, and blue.

3. YUV image

A YUV image is an image encoded based on luminance and chrominance. Y represents luminance (luminance), and U and V represent chrominance. The chrominance defines two aspects of color, that is, hue and saturation.

Specifically, luminance represents a physical quantity of intensity of light, felt by human eyes, that is emitted or reflected from a light-emitting object or a surface of an illuminated object. When surfaces of any two objects that are photographed are equally bright in final photographing results, or the two surfaces appear to be equally bright to the eyes, it indicates that luminance of the two objects is the same. A hue is represented as a color in a colored image.

A hue is representation, in an image, of intensity of reflected and radiant energy of clutter. An attribute, a geometric shape, a distribution range, and a combination rule of the clutter can be reflected on a remote sensing image by different hues.

Saturation refers to intensity of color, also referred to as purity of color. Saturation depends on a ratio of a chromatic component to an achromatic component (gray). A greater proportion of the chromatic component indicates higher saturation, and a greater proportion of the achromatic component indicates lower saturation. Pure colors, for example, bright red and bright green, are highly saturated. A color mixed with white, gray, or another hue is an unsaturated color, for example, dark reddish purple, pink, yellow brown, etc. A completely unsaturated color, for example, various grays between black and white, has no hue at all.

Generally, a YUV image may be further classified into three types, that is, YUV 4:4:4, YUV 4:2:2, and YUV 4:2:0, based on different sampling frequency ratios. YUV 4:4:4 means no downsampling of a chrominance channel. That is, one Y-component corresponds to one U-component and one V-component. YUV 4:2:2 means 2:1 horizontal downsampling, with no vertical downsampling. That is, two Y-components share one U-component and one V-component. YUV 4:2:0 means 2:1 horizontal downsampling, with 2:1 vertical downsampling. That is, every four Y-components share one U-component and one V-component.

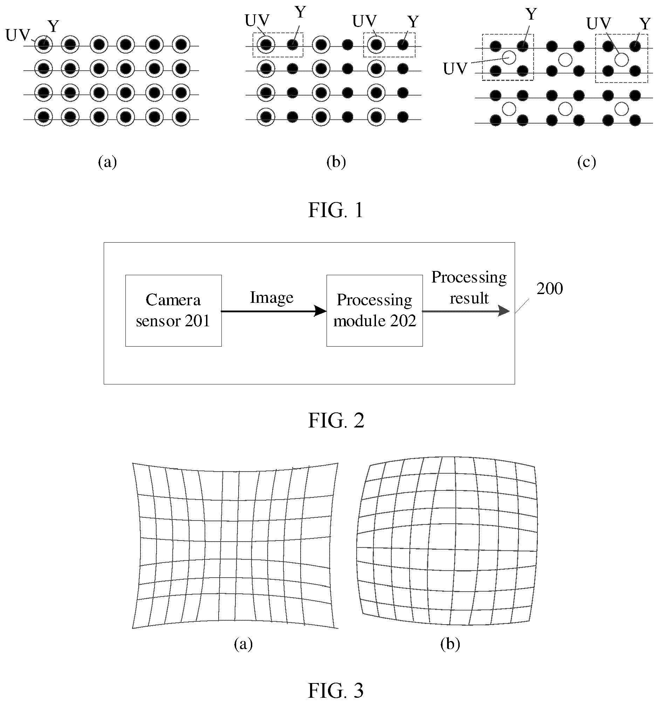

For example, FIG. 1 is a schematic diagram of structures of YUV images corresponding to three sampling manners according to this application. In the schematic diagram, a black point represents a Y-component corresponding to a sampled pixel, and a hollow circle represents a UV-component of the sampled pixel (that is, one hollow circle represents one U-component and one V-component at the same time).

FIG. 1(a) is a schematic diagram of a structure of YUV 4:4:4. As shown in FIG. 1(a), each pixel includes one black point and one hollow circle. That is, one Y-component corresponds to one U-component and one V-component.

FIG. 1(b) is a schematic diagram of a structure of YUV 4:2:2. As shown in FIG. 1(b), every two adjacent pixels share one UV-component. Specifically, two adjacent pixels included in a dashed box in FIG. 1(b) are used as an example for description. As shown in the dashed box in FIG. 1(b), the first pixel corresponds to one Y-component represented by a black point, the second pixel corresponds to one Y-component represented by a black point, and the first pixel and the second pixel share one hollow circle. That is, the two Y-components share one U-component and one V-component.

FIG. 1(c) is a schematic diagram of a structure of YUV 4:2:0. As shown in FIG. 1(c), every four adjacent pixels up and down share one UV-component. Specifically, four adjacent pixels up and down included in a dashed box in FIG. 1(c) are used as an example for description. As shown in the dashed box in FIG. 1(c), each pixel in the four adjacent pixels up and down correspond to one black point. That is, the four adjacent pixels up and down each correspond to one Y-component, and the four adjacent pixels up and down share one hollow circle. That is, four Y-components share one U-component and one V-component.

In recent years, with rapid development of artificial intelligence technologies, computer vision technologies have been extensively used in fields such as medical care, autonomous driving, and industrial engineering. Generally, in a computer vision technology, an image used to describe external environment information usually needs to be obtained by using a camera sensor at first, and then the image is processed according to some algorithms in the computer vision technology.

For example, FIG. 2 is a schematic diagram of a structure of an image processing system according to this application. As shown in FIG. 2, an image processing system 200 includes a camera sensor 201 and a processing module 202.

The camera sensor 201 is configured to: acquire an image that can describe external environment information, and input the image into the processing module 202. It should be understood that a YUV format and an RGB format are two common image formats. An image stored in the YUV format is referred to as a YUV image, and an image stored in the RGB format is referred to as an RGB image. In most cases, to ease pressure on storage, the camera sensor 201 usually stores, in the YUV format, information about the image. For specific content about the YUV image and the RGB image, refer to descriptions of the foregoing related terms. Details are not described herein again.

The processing module 202 is configured to receive the image sent from the camera sensor 201 and perform processing based on the image by using a preset processing algorithm.

It should be noted herein that a specific form of the camera sensor 201 is not limited in this embodiment of this application. For example, the camera sensor may be a fisheye camera, a hawkeye camera, or a monocular or binocular camera. This does not constitute a limitation on this application.

It should be further noted herein that a specific application scenario of the image processing system 200 is not limited in this embodiment of this application. For example, the image processing system 200 may be used in an autonomous driving scenario. Further, in this scenario, after the processing module 202 receives the image sent from the camera sensor 201, processing performed by the processing module 202 based on the image by using the preset processing algorithm may be, for example: further performing decision-making on an autonomous driving behavior based on the image. This does not constitute a limitation on this application. Clearly, this embodiment of this application may alternatively be applied to another system using visual recognition processing.

However, for the image processing system shown in FIG. 2, an image obtained by the camera sensor 201 is usually distorted to some degree. For example, FIG. 3 is a schematic diagram of a distorted image. FIG. 3(a) is a schematic diagram of a structure of pincushion distortion, and FIG. 3(b) is a schematic diagram of a structure of barrel distortion. It can be learned that if the distorted image is directly used as an input of a processing algorithm, accuracy of a subsequent image processing result may be affected.

For example, in the field of autonomous driving, at present, various types of camera sensors, such as fisheye cameras, hawkeye cameras, or monocular or binocular cameras, have been applied to autonomous driving devices. An autonomous driving device may train, by using a computing platform according to a machine learning algorithm, for example, a mobile data center (mobile data center, MDC), a domain controller, or an electronic control unit, a decision-making model based on a large quantity of images acquired by a camera sensor, and then perform decision-making by using the decision-making model based on an image obtained by the camera sensor in real time. However, because the image obtained by the camera sensor is distorted to some degree, in this case, if the distorted image is directly input into the machine learning algorithm during training of the decision-making model, accuracy of the trained decision-making model may be affected. Further, accuracy of a decision-making result obtained when the decision-making model performs decision-making based on the image obtained by the camera sensor in real time is affected.

Therefore, the distorted image is undistorted, or corrected, at first, and then the undistorted image is used as an input of the preset processing algorithm, to improve accuracy of a processing result obtained by subsequent processing based on the image according to the preset processing algorithm.

For example, an initial image acquired by the camera sensor may be undistorted based on an RGB mapping relationship provided by a camera manufacturer. The RGB mapping relationship indicates a corresponding location, in an initial RGB image, of each pixel in an undistorted target RGB image. However, in most cases, the initial image acquired by the camera sensor is a YUV image, and a mapping relationship indicated by the RGB mapping relationship is for the undistorted target RGB image and the initial RGB image. Therefore, color gamut transformation may be first performed on an initial YUV image acquired by the camera sensor, to obtain an initial RGB image; the RGB mapping relationship for the camera sensor provided by the camera manufacturer is obtained; and finally, a pixel value at the corresponding location, in the initial RGB image, that is of each pixel in the undistorted target RGB image and that is indicated by the RGB mapping relationship is obtained to obtain a pixel value of each pixel in the undistorted target RGB image, to obtain an undistorted image.

Specifically, when the initial YUV image is converted into the initial RGB image, the conversion may be performed according to a formula 1:

$$Y_x = 0.299 * r_x + 0.587 * g_x + 0.114 * b_x$$
$$U_x = -0.169 * r_x - 0.331 * g_x + 0.5 * b_x + 128$$
$$V_x = 0.5 * r_x - 0.419 * g_x - 0.081 * b_x + 128$$

(Formula 1)

$Y_x$ represents a value of a Y-component at a pixel $x$, $U_x$ represents a value of a U-component at the pixel $x$, $V_x$ represents a value of a V-component at the pixel $x$, $r_x$ represents a value of an R-component at the pixel $x$, $g_x$ represents a value of a G-component at the pixel $x$, and $b_x$ represents a value of a Y-component at the pixel $x$.

However, it takes a lot of time to convert the initial YUV image into the initial RGB image, and the whole undistortion process is very time-consuming. For example, generally, it takes 2 milliseconds (millisecond, ms) to convert a 2-megabyte (M) initial YUV image into a 1024×768 initial RGB image, and it takes 8 ms to convert an 8M initial YUV image into a 1024×768 initial RGB image.

Therefore, how to reduce time for the undistortion process becomes an urgent technical problem to be resolved.

In view of this, this application provides a new undistortion method, that is, provides a new image processing method. In the technical solutions provided in this application, a processing module may first determine, based on an RGB mapping relationship, a corresponding location, in an initial YUV image, of each pixel in an undistorted image (that is, determine a YUV mapping relationship), and then obtain, based on the YUV mapping relationship after a first YUV image is obtained, a pixel value at a location corresponding to the first YUV image to obtain a pixel value at each location in a second undistorted YUV image, that is, to obtain an undistorted image.

It can be understood that, in the technical solutions provided in this application, because the YUV mapping relationship directly indicates a location of an undistorted target image in an initial YUV image, a process of converting the initial YUV image to an initial RGB image is not needed, so that time for the undistortion process can be reduced. Further, it can be understood that, when more images need to be undistorted, an effect of reducing time for the undistortion process according to the undistortion method provided in this application is more obvious.

By using specific embodiments, the technical solutions of this application and how to resolve the foregoing technical problem according to the technical solutions of this application are described below in detail. The following several specific embodiments may be combined with each other, and a same or similar concept or process may not be described repeatedly in some embodiments. Embodiments of this application are described below with reference to the accompanying drawings.

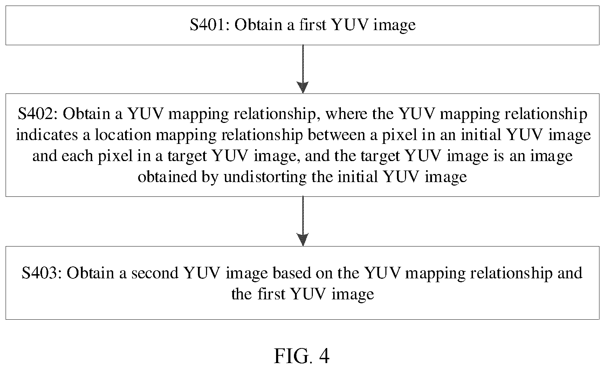

FIG. 4 is a schematic flowchart of an image processing method according to an embodiment of this application. As shown in FIG. 4, the method according to this embodiment may include S401, S402, and S403. The image processing method may be performed by a processing module in the image processing system shown in FIG. 2.

S401: Obtain a first YUV image.

It should be understood that, to ease pressure on storage, most camera sensors generally store an image or a video in a YUV format. In this embodiment, the first YUV image is an image captured by a camera sensor and stored in the YUV format, for example, an image captured by a fisheye camera, a hawkeye camera, or a monocular or binocular camera. For a concept of YUV, refer to descriptions in a related technology. Details are not described herein again.

It should be noted herein that a manner of obtaining the first YUV image is not limited in this embodiment of this application, and may be determined based on a specific scenario.

For example, if the processing module needs to perform decision-making in real time based on an external environment, the camera sensor may send the first YUV image to the processing module provided that the camera sensor obtains the first YUV image, so that the processing module can perform processing in real time based on the first YUV image obtained by the camera sensor.

For another example, if the processing module only needs to perform decision-making within a specific time period based on an external environment, the processing module may send request information to the camera sensor within the specific time period, and then the camera sensor sends, after receiving the request message from the processing module, the obtained first YUV image to the processing module, so that the processing module can perform processing, within the specific time period, based on the first YUV image obtained by the camera sensor.

It should be noted herein that, in this embodiment of this application, the first YUV image is also referred to as a first original YUV image or a first initial YUV image.

S402: Obtain a YUV mapping relationship, where the YUV mapping relationship indicates a location mapping relationship between a pixel in an initial YUV image and each pixel in a target YUV image, and the target YUV image is an image obtained by undistorting the initial YUV image.

Usually, an initial image obtained by the camera sensor is distorted to some degree, for example, has linear distortion, barrel distortion, or pincushion distortion. Therefore, in some processing algorithms in which an image is needed, to not affect accuracy of a subsequent processing result, the initial image obtained by the camera sensor is usually undistorted at first.

In this embodiment, if the camera sensor obtains the initial YUV image, an image obtained by undistorting the initial YUV image is referred to as the target YUV image. It should be noted herein that, in this application, the target YUV image is also referred to as an undistorted YUV image.

In this embodiment, the YUV mapping relationship indicates the location mapping relationship between the pixel in the initial YUV image and each pixel in the target YUV image (an undistorted YUV image). That is, a specific location, in the initial YUV image, of each pixel in the undistorted YUV image can be determined based on the YUV mapping relationship.

It can be understood that, because the YUV mapping relationship indicates the specific location, in the initial YUV image, of each pixel in the undistorted YUV image, after the YUV mapping relationship is obtained, for each pixel in the undistorted YUV image, the specific location, of each pixel, in the initial YUV image may be determined at first; and then, it may be determined that a pixel value at the specific location in the initial YUV image is a pixel value of each pixel in the target YUV image.

In a feasible solution, the YUV mapping relationship may be obtained based on an RGB mapping relationship. Specifically, that the YUV mapping relationship is obtained may include: obtaining the RGB mapping relationship, where the RGB mapping relationship indicates a location mapping relationship between each pixel in a target RGB image and a pixel in an initial RGB image, the initial RGB image is an image obtained by converting the initial YUV image into an RGB image, the target RGB image is an image obtained by undistorting the initial RGB image, and a size of the target RGB image is equal to a size of the target YUV image; and determining the YUV mapping relationship based on the RGB mapping relationship.

In this implementation, that the size of the target RGB image is equal to the size of the target YUV image means that a quantity of pixels in the target RGB image in a horizontal direction is the same as a quantity of pixels in the target YUV image in a horizontal direction, and a quantity of pixels in the target RGB image in a vertical direction is the same as a quantity of pixels in the target YUV image in a vertical direction.

In this implementation, the initial RGB image is a corresponding image obtained through color gamut transformation on the initial YUV image obtained by the camera sensor. It should be noted herein that, for how to convert a YUV image into an RGB image, refer to descriptions in a related technology. Details are not described herein again.

Usually, when a camera manufacturer produces a camera sensor, distortion that may occur in the camera sensor can be almost determined in advance. Therefore, to resolve the problem of distortion, the camera manufacturer usually provides a mapping relationship (that is, an RGB mapping relationship) in advance that is used to reflect a correspondence between a location of a pixel in an initial RGB image and a location of a pixel in an undistorted RGB image. For example, the mapping relationship may indicate a corresponding location, in the initial RGB image, of each pixel in the undistorted RGB image (that is, the target RGB image). For another example, the mapping relationship may indicate a corresponding location, in the undistorted RGB image, of each pixel in the initial RGB image. The location may be represented by a coordinate value, or may be represented by an offset of a vertical coordinate or a horizontal coordinate of each pixel in the initial RGB image or the undistorted RGB image relative to that of a pixel in the other RGB image. In this way, for an obtained initial RGB image that may be distorted, to obtain an undistorted RGB image, a specific location, in the initial RGB image, of each pixel in the undistorted RGB image may be determined at first based on the RGB mapping relationship, and then a pixel value at the specific location in the initial RGB image is used as a pixel value of a corresponding pixel in the undistorted RGB image.

It should be noted herein that, for different camera sensors, corresponding RGB mapping relationships may be different.

It should also be noted herein that a specific form of the RGB mapping relationship is not limited in this embodiment. For example, in a possible solution, the RGB mapping relationship may be represented in a form of a mapping table. Specifically, during implementation, a horizontal coordinate value, in the initial RGB image, of each pixel in the undistorted RGB image may be indicated by using a mapping table, and a vertical coordinate value, in the initial RGB image, of each pixel in the undistorted RGB image may be indicated by using another mapping table.

An example in which the undistorted RGB image is an image of a size of two rows and four columns is used, that is, the undistorted RGB image includes eight pixels. In this case, as shown in Table 1, a horizontal coordinate value, in the initial RGB image, of each pixel in the eight pixels may be indicated by using Table 1. As shown in Table 2, a vertical coordinate value of each pixel in the eight pixels in the initial RGB image is indicated by using Table 2.

**Table 1**

|    | X1 | X2 | X3 | X4 |
|----|----|----|----|----|
| Y1 | Horizontal coordinate value in the initial RGB image | Horizontal coordinate value in the initial RGB image | Horizontal coordinate value in the initial RGB image | Horizontal coordinate value in the initial RGB image |
| Y2 | Horizontal coordinate value in the initial RGB image | Horizontal coordinate value in the initial RGB image | Horizontal coordinate value in the initial RGB image | Horizontal coordinate value in the initial RGB image |

**Table 2**

|    | X1 | X2 | X3 | X4 |
|----|----|----|----|----|
| Y1 | Vertical coordinate value in the initial RGB image | Vertical coordinate value in the initial RGB image | Vertical coordinate value in the initial RGB image | Vertical coordinate value in the initial RGB image |
| Y2 | Vertical coordinate value in the initial RGB image | Vertical coordinate value in the initial RGB image | Vertical coordinate value in the initial RGB image | Vertical coordinate value in the initial RGB image |

(X1, Y1) is the first pixel in the first row in the undistorted RGB image, (X2, Y1) is the second pixel in the first row in the undistorted RGB image, (X3, Y1) is the third pixel in the first row in the undistorted RGB image, and (X4, Y1) is the fourth pixel in the first row in the undistorted RGB image. (X1, Y2) is the first pixel in the second row in the undistorted RGB image, (X2, Y2) is the second pixel in the second row in the undistorted RGB image, (X3, Y2) is the third pixel in the second row in the undistorted RGB image, and (X4, Y2) is the fourth pixel in the second row in the undistorted RGB image. It can be learned that a pixel value of each pixel in an undistorted image can be determined according to Table 1 and Table 2. It should be noted that Table 1 and Table 2 are merely examples and constitute no limitation. In a possible implementation, the vertical coordinate value and the horizontal coordinate value may be combined in one table. In some possible implementations, a corresponding coordinate value may alternatively be indicated by using an offset.

It can be understood that an RGB image may include an R-channel image, a G-channel image, and a B-channel image. A YUV image may include a Y-channel image, a U-channel image, and a V-channel image.

Usually, when an RGB-format image is stored, a pixel value of an R-component of each pixel in the R-channel image is generally stored at first, then a pixel value of a G-component of each pixel in the G-channel image is stored, and finally a pixel value of a B-component of each pixel in the B-channel image is stored. When a YUV-format image is stored, there are generally two storage manners. A first storage manner is packed storage in which a Y-component, a U-component, and a V-component are interleaved and stored continuously in a unit of pixels. The other storage manner is planar storage in which three arrays are used to store continuous Y-, U-, and V-components separately.

For ease of understanding, examples in which a 4×4 colored image is stored as an RGB-format image and a YUV-format image are used for description. It can be understood that the first 4 of the 4×4 colored image means that the image includes four pixels in a horizontal direction, and the second 4 means that the image includes four pixels in a vertical direction.

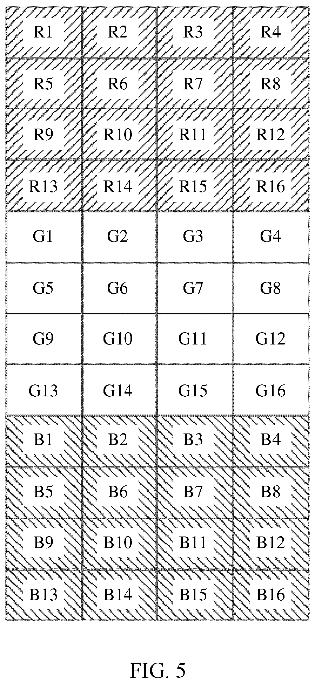

FIG. 5 is a schematic diagram of a structure when a 4×4 colored image is stored as an RGB-format image according to this application. As shown in FIG. 5, when the 4×4 image is stored in an RGB format, a pixel value of an R-component (including R1 to R16 in the figure) of each pixel in 4×4 R-channels is usually stored at first, and then a pixel value of a G-component (including G1 to G16 in the figure) of each pixel in 4×4 G-channels is stored, and finally, a pixel value of a B-component (including B1 to B16 in the figure) of each pixel in 4×4 B-channels is stored.

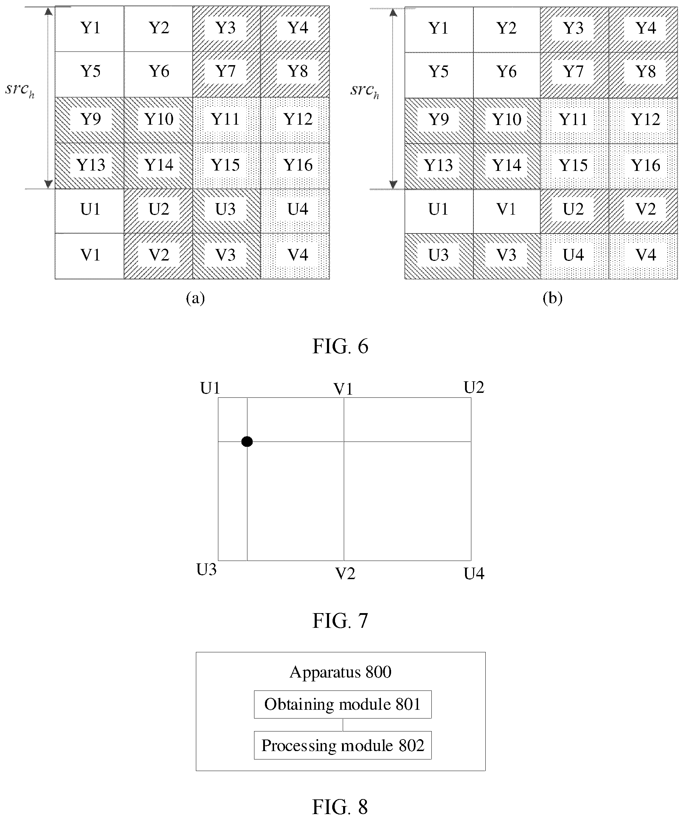

FIG. 6 is a schematic diagram of a structure when a 4×4 colored image is stored as a YUV-format image according to this application. It should be noted herein that, in FIG. 6, a YUV image obtained when a sampling frequency of a Y-component, a sampling frequency of a U-component, and a sampling frequency of a V-component satisfy a relationship of 4:2:0 is used as an example. It should be understood that, for YUV 4:2:0, each pixel corresponds to one Y-component, and every four Y-components share one UV-component. Therefore, when the 4×4 colored image is stored in a YUV format, 16 Y-components, four U-components, and four V-components are included in total. Specifically, when the planar storage is used, as shown in FIG. 6(a), values of the 16 Y-components are usually stored at first. It is assumed that the 16 Y-components are denoted as Y1, Y2, Y3, Y4, Y5, Y6, Y7, Y8, Y9, Y10, Y11, Y12, Y13, Y14, Y15 and Y16 respectively. Then, after the values of the 16 Y-components are stored, values of the four U-components are stored. U1 is a U-component shared among Y1, Y2, Y5, and Y6. U2 is a U-component shared among Y3, Y4, Y7, and Y8. U3 is a U-component shared among Y9, Y10, Y13, and Y14. U4 is a U-component shared among Y11, Y12, Y15, and Y16. Finally, after the values of the four U-components are stored, values of the four V-components are stored. V1 is a V-component shared among Y1, Y2, Y5, and Y6. V2 is a V-component shared among Y3, Y4, Y7, and Y8. V3 is a V-component shared among Y9, Y10, Y13, and Y14. V4 is a V-component shared among Y11, Y12, Y15, and Y16. By contrast, when the 4×4 colored image is stored in a manner of packed storage, as shown in FIG. 6(b), the values of the 16 Y-components are still stored at first, and then the four U-components and the four V-components are interleaved for storage after the values of the 16 Y-components are stored.

It should be noted herein that the 4×4 colored image is merely an example, and does not constitute a limitation on this application.

For example, for any L×W colored image, L indicates that the image includes L pixels in a horizontal direction, and W indicates that the image includes W pixels in a vertical direction.

It can be understood that, when the L×W colored image is stored in the RGB format, usually, pixel values of L×W R-components are stored at first, pixel values of L×W G-components are then stored, and finally, pixel values of L×W B-components are stored.

When the L×W colored image is stored in the YUV format, there may also be the planar storage and the packed storage. It can be understood that, in the case of YUV 4:2:0, because each pixel corresponds to one Y-component and every four Y-components share one UV-component, the L×W colored image includes L×W Y-components, L×W/4 U-components, and L×W/4 V-components in total. Therefore, when the L×W colored image is stored in a manner of planar storage, pixel values of the L×W Y-components are stored at first, pixel values of the L×W/4 U-components are then stored after the pixel values of the L×W Y-components are stored, and finally, pixel values of the L×W/4 V-components are stored after the pixel values of the L×W/4 U-components are stored. By contrast, when the L×W colored image is stored in a manner of packed storage, the pixel values of the L×W Y-components are still stored at first, and after the pixel values of the L×W Y-components are stored, the L×W/4 U-components and the L×W/4 V-components are then interleaved for storage.

It can be learned that when the image is stored in the YUV format, a storage manner for the Y-channel remains the same regardless of whether the planar storage or packed storage is used. It can be further learned that, for manners of storing an RGB image and a YUV image, a storage manner for the Y-channel in the YUV format is the same as a storage manner for the R-channel/G-channel/B-channel in the RGB format, and a difference lies in a storage manner for the U-channel and a storage manner for the V-channel in the YUV format. However, there is a correspondence between the storage manner for the U-channel and the storage manner for the V-channel, and the storage manner for the Y-channel in the YUV format.

Therefore, in a feasible solution, when the YUV mapping relationship needs to be determined, a first target mapping relationship, a second target mapping relationship, and a third target mapping relationship may each be determined based on the RGB mapping relationship. The first target mapping relationship indicates a location, in a Y-channel image corresponding to the initial YUV image, of each pixel in the target YUV image; the second target mapping relationship indicates a location, in a U-channel image corresponding to the initial YUV image, of each pixel in the target image; and the third target mapping relationship indicates a location, in a V-channel image corresponding to the initial YUV image, of each pixel in the target YUV image. Specifically, because the RGB mapping relationship indicates a location, in an R-channel/G-channel/B-channel of the initial RGB image, of each pixel in the target RGB image, and the storage manner for the Y-channel in the YUV format is the same as the storage manner for the R-channel/G-channel/B-channel in the RGB format, it may be directly determined that the first target mapping relationship is the same as the RGB mapping relationship. In other words, the location, in the Y-channel image corresponding to the initial YUV image, of each pixel in the target YUV image may be directly determined.

Further, for each pixel in the target YUV image, because there is a correspondence between arrangements of the Y-component and the U/V-component, after it is determined that the first target mapping relationship is the RGB mapping relationship, the second target mapping relationship may be determined based on the RGB mapping relationship and a correspondence between the U-component and the Y-component, and the third target mapping relationship may be determined based on the RGB mapping relationship and a correspondence between the V-component and the Y-component. Specifically, a horizontal coordinate value and a vertical coordinate value, in the U-channel image corresponding to the initial YUV image, of a first pixel in the target YUV image are determined based on the RGB mapping relationship and the correspondence between the U-component and the Y-component, and a horizontal coordinate value and a vertical coordinate value, of the first pixel, in the V-channel image corresponding to the initial YUV image are determined based on the RGB mapping relationship and the correspondence between the V-component and the Y-component. The first pixel is any pixel in all pixels.

For ease of understanding, descriptions are provided with reference to FIG. 5 and FIG. 6(a). It is assumed that the image shown in FIG. 5 is an RGB image that is undistorted based on an existing RGB mapping relationship, and the image shown in FIG. 6(a) is an undistorted YUV image. The existing RGB mapping relationship indicates an original location (a horizontal coordinate value and a vertical coordinate value), in the initial RGB image, of each pixel (in a one-to-one correspondence with R1 to R16) in the undistorted RGB image shown in FIG. 5.

As shown in FIG. 5 and FIG. 6(a), a manner of storing each pixel (in a one-to-one correspondence with Y1 to Y16) in the undistorted YUV image is exactly the same as a manner of storing each pixel (in a one-to-one correspondence with R1 to R16) in the undistorted RGB image. Therefore, for each pixel represented as Y1 to Y16 in the undistorted YUV image, a location of the pixel in the initial YUV image is the same as the original location, in the initial RGB image (an image obtained through color gamut transformation on the initial YUV image), of each pixel in the undistorted RGB image. That is, the existing RGB mapping relationship may directly indicate an original location, in the initial YUV image, of each pixel (in a one-to-one correspondence with R1 to R16) in the undistorted YUV image. Then, further based on the storage correspondence among the Y-component, the U-component, and the V-component, the horizontal coordinate value and the vertical coordinate value of each pixel in the U-channel image corresponding to the initial YUV image may be determined, and the horizontal coordinate value and the vertical coordinate value of each pixel in the V-channel image corresponding to the initial YUV image may be determined.

For example, to determine a location (a horizontal coordinate value and a vertical coordinate value) of the U1-component in FIG. 6(a) in the initial YUV image, because the U1-component corresponds to the Y1-component, the Y2-component, the Y5-component, and the Y6-component, and a location of the Y1-component in the initial YUV image, a location of the Y2-component in the initial YUV image, a location of the Y5-component in the initial YUV image, and a location of the Y6-component in the initial YUV image have been determined based on the RGB mapping relationship, the location of the U1-component in the initial YUV image may be determined based on the location of the Y1-component in the initial YUV image, the location of the Y2-component in the initial YUV image, the location of the Y5-component in the initial YUV image, and the location of the Y6-component in the initial YUV image.

S403: Obtain a second YUV image based on the YUV mapping relationship and the first YUV image.

Because the YUV mapping relationship indicates the location mapping relationship between each pixel in the target YUV image and the pixel in the initial YUV image, it may be considered that the YUV mapping relationship indicates a location, in the initial YUV image, of each pixel in the target YUV image.

Therefore, in this embodiment, after the first YUV image is obtained, to obtain an undistorted image (that is, the second YUV image), a location, in the first YUV image, of each pixel in the second YUV image may be determined at first based on the YUV mapping relationship. Specifically, locations, in a Y-channel image, a U-channel image, and a V-channel image that correspond to the first YUV image, of each pixel in the second YUV image are determined based on the YUV mapping relationship. Then, a pixel value of each pixel in the second YUV image is obtained based on a pixel value, at the location in the Y-channel image corresponding to the first YUV image, a pixel value, at the location in the U-channel image corresponding to the first YUV image, and a pixel value, at the location in the V-channel image corresponding to the first YUV image, that are of each pixel in the second YUV image, to obtain the second YUV image.

It should be noted herein that, because locations, in the initial RGB image, of some pixels indicated by the RGB mapping relationship are floating-point values, a method of bilinear interpolation usually needs to be further used to obtain a pixel value at a corresponding location. For a concept and a detailed implementation process of the method of bilinear interpolation, refer to descriptions in a related technology. Details are not described herein again.

According to the image processing method provided in this embodiment of this application, because of the location mapping relationship between each pixel in the target YUV image and the pixel in the initial YUV image, after the first YUV image is obtained, an undistortion operation can be directly performed on the first YUV image, and there is no need to convert the first YUV image into an RGB image at first and then undistort the RGB image based on the RGB mapping relationship. Therefore, time for the undistortion process can be reduced. It can be understood that, when more YUV images need to be undistorted, time for the undistortion process is more significantly reduced.

It can be learned from the descriptions in the foregoing embodiments that, when an RGB-format image and a YUV-format image are stored, a storage manner for an R-channel of the RGB image is the same as a storage manner for a Y-component in the YUV format, and a difference lies in storage manners for a U-component and a V-component in the YUV-format image. Therefore, after the RGB mapping relationship is obtained, it may be considered that the RGB mapping relationship is equivalent to an indication of the location, in the Y-channel image corresponding to the initial YUV image, of each pixel in the target YUV image. Further, a location, in a U-channel image of the initial YUV image, of each pixel in the target YUV image, and a location, in a V-channel image of the initial YUV image, of each pixel in the target YUV image are determined based simply on a correspondence between a storage manner for a U-component and a storage manner for a Y-component that are of the YUV image, and a correspondence between a storage manner for a V-component and the storage manner for the Y-component that are of the YUV image. Specifically, based on the RGB mapping relationship, the horizontal coordinate value and the vertical coordinate value, in the U-channel image corresponding to the initial YUV image, of the first pixel in the target YUV image may be determined, and the horizontal coordinate value and the vertical coordinate value, of the first pixel, in the V-channel image corresponding to the initial YUV image may be determined. The first pixel is any pixel in all pixels.

A first example in which a sampling frequency of a Y-component, a sampling frequency of a U-component, and a sampling frequency of a V-component that are of the first YUV image satisfy a relationship of 4:2:0, and a manner of storing the first YUV image is planar storage, and a second example in which the sampling frequency of the Y-component, the sampling frequency of the U-component, and the sampling frequency of the V-component that are of the first YUV image satisfy the relationship of 4:2:0, and the manner of storing the first YUV image is packed storage are used below to describe in detail how the YUV mapping relationship is obtained.

How to obtain the YUV mapping relationship, if the sampling frequency of the Y-component, the sampling frequency of the U-component, and the sampling frequency of the V-component that are of the first YUV image satisfy the relationship of 4:2:0, and the manner of storing the first YUV image is planar storage, is described first below.

It can be learned from FIG. 5 and FIG. 6 in the foregoing embodiments that an arrangement of an R-component is the same as an arrangement of a Y-component. Therefore, for the first target mapping relationship that indicates the location, in the Y-channel image corresponding to the initial YUV image, of each pixel in the target YUV image, the RGB mapping relationship may be directly used.

In addition, it can be learned from the foregoing embodiments that, when the YUV image is stored in a manner of planar storage, every four Y-components share one U-component and one V-component. In other words, it may be considered that one U-component corresponds to four Y-components in the Y-channel. For example, as shown in FIG. 6(a), U1 corresponds to Y1, Y2, Y5, and Y6; U2 corresponds to Y3, Y4, Y7, and Y8; U3 corresponds to Y9, Y10, Y13, and Y14; and U4 corresponds to Y11, Y12, Y15, and Y16.

Therefore, in this embodiment, the horizontal coordinate value, in the U-channel image corresponding to the initial YUV image, of the first pixel in the target YUV image may be determined according to a formula $U_x = \dfrac{temp1}{4}/2$ , where $temp1$ represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; the vertical coordinate value, of the first pixel, in the U-channel image corresponding to the initial YUV image may be determined according to a formula $U_y = src_h + \dfrac{src_h}{4} * k$ , where $src_h$

represents a height of the initial YUV image, k represents a ratio, $k = \dfrac{temp2}{4} / src_h$ , and $tempi$ represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and correspondingly, that the horizontal coordinate value and the vertical coordinate value, of the first pixel, in the V-channel image corresponding to the initial YUV image are determined includes: The horizontal coordinate value, of the first pixel, in the V-channel image corresponding to the first image is determined according to a formula $V_x = \dfrac{temp1}{4} / 2$ ; and the vertical coordinate value, of the first pixel, in the V-channel image corresponding to the first image is determined according to a formula $V_y = src_h * \dfrac{5}{4} + \dfrac{src_h}{4} * k$ .

For example, for the 4×4 YUV image shown in FIG. 6(a), it is assumed that a location, in the initial RGB image, of each of four pixels (that are assumed to be referred to as a pixel Y1, a pixel Y2, a pixel Y5, and a pixel Y6) that are in a one-to-one correspondence with a Y1 component, a Y2 component, a Y5 component, and a Y6 component is indicated in an RGB mapping table, and it is assumed that a specific location of the pixel Y1 in the initial YUV image is represented as Y11, a specific location of the pixel Y2 in the initial YUV image is represented as Y12, a specific location of the pixel Y5 in the initial YUV image is represented as Y21, and a specific location of the pixel Y6 in the initial YUV image is represented as Y22.

In this case, because the pixel Y1, the pixel Y2, the pixel Y5, and the pixel Y6 correspond to a same U-component and a same V-component, when locations, in the initial YUV image, of the U1 component and the V1 component that correspond to the pixel Y1, the pixel Y2, the pixel Y5, and the pixel Y6 need to be determined, the following formula may be used:

$$
\begin{cases}
temp1 = Y11_x + Y12_x + Y21_x + Y22_x \\
temp2 = Y11_y + Y12_y + Y21_y + Y22_y \\
k = \dfrac{temp2}{4} / src_h \\
U_{1x} = \dfrac{temp1}{4} / 2 \\
U_{1y} = src_h + \dfrac{src_h}{4} * k \\
V_{1x} = \dfrac{temp1}{4} / 2 \\
V_{1y} = src_h * \dfrac{5}{4} + \dfrac{src_h}{4} * k
\end{cases}
$$

$Y11_x$ represents a horizontal coordinate value, of the pixel Y1, in the initial RGB image, $Y12_x$ represents a horizontal coordinate value, of the pixel Y2, in the initial RGB image, $Y21_x$ represents a horizontal coordinate value, of the pixel Y5, in the initial RGB image, and $Y22_x$ represents a horizontal coordinate value, of the pixel Y6, in the initial RGB image. $Y11_y$ represents a vertical coordinate value, of the pixel Y1, in the initial RGB image, $Y12_y$ represents a vertical coordinate value, of the pixel Y2, in the initial RGB image, $Y21_y$ represents a vertical coordinate value, of the pixel Y5, in the initial RGB image, and $Y22_y$ represents a vertical coordinate value, of the pixel Y6, in the initial RGB image. $U_{1x}$ represents a horizontal coordinate value, of each of the pixel Y1, the pixel Y2, the pixel Y5, and the pixel Y6, in the U-channel image corresponding to the initial YUV image. $U_{1y}$ represents a vertical coordinate value, of each of the pixel Y1, the pixel Y2, the pixel Y5, and the pixel Y6, in the U-channel image corresponding to the initial YUV image. $V_{1x}$ represents a horizontal coordinate value, of each of the pixel Y1, the pixel Y2, the pixel Y5, and the pixel Y6, in the V-channel image corresponding to the initial YUV image. $V_{1y}$ represents a vertical coordinate value, of each of the pixel Y1, the pixel Y2, the pixel Y5, and the pixel Y6, in the V-channel image corresponding to the initial YUV image. $src_h$ represents a height of the initial RGB image.

In this embodiment, when the YUV image is stored in a manner of planar storage, the specific location, in the Y-channel, the specific location in the U-channel, and the specific location in the V-channel that correspond to the initial YUV image, of each pixel in the target YUV image can be determined based on the RGB mapping relationship, so that an undistorted YUV image can be obtained without having to converting the initial YUV image into the initial RGB image.

How to obtain the YUV mapping relationship, if the sampling frequency of the Y-component, the sampling frequency of the U-component, and the sampling frequency of the V-component that are of the first YUV image satisfy the relationship of 4:2:0, and the manner of storing the first YUV image is packed storage, is described below.

It can be learned from FIG. 6(a) and FIG. 6(b) that a difference between packed storage and planar storage lies in different arrangements of the U-component and the V-component.

It can be learned that, for packed storage, the U-component and the V-component are interleaved. Therefore, vertical coordinate values of the U-component and the V-component are the same, and a horizontal coordinate value of the U-component and a vertical coordinate value of the V-component that correspond to each pixel differ by one pixel.

Therefore, in this scenario, the horizontal coordinate value, in the U-channel image corresponding to the initial

$$U_x = \frac{temp1}{4}$$

YUV image, of the first pixel in the target YUV image may be determined according to a formula , where $temp1$ represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; the vertical

coordinate value, of the first pixel, in the U-channel image corresponding to the initial YUV image may be

$$U_y = src_h + \frac{src_h}{2} * k$$

determined according to a formula , where $src_h$ represents a height of the initial YUV image, k

$$k = \frac{temp2}{4} / src_h$$

represents a ratio, , and $tempi$ represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and correspondingly, that the horizontal coordinate value and the vertical coordinate value, of the first pixel, in the V-channel image corresponding to the initial YUV image are determined includes: The horizontal coordinate value, of the first pixel, in the V-channel image corresponding to the initial YUV image is determined according to a formula $V_x = U_x + 1$; and the vertical coordinate value, of the first pixel, in the V-channel image corresponding to the initial YUV image is determined

$$V_y = src_h + \frac{src_h}{2} * k$$

according to a formula .

For example, for the $4 \times 4$ YUV image shown in FIG. 6(b), it is assumed that a location, in the initial RGB image, of each of four pixels (that are assumed to be referred to as a pixel Y1, a pixel Y2, a pixel Y5, and a pixel Y6) that are in a one-to-one correspondence with a Y1 component, a Y2 component, a Y5 component, and a Y6 component is indicated in an RGB mapping table, and it is assumed that a specific location of the pixel Y1 in the initial YUV image is represented as Y11, a specific location of the pixel Y2 in the initial YUV image is represented as Y12, a specific location of the pixel Y5 in the initial YUV image is represented as Y21, and a specific location of the pixel Y6 in the initial YUV image is represented as Y22. Because the pixel Y1, the pixel Y2, the pixel Y5, and the pixel Y6 correspond to the same U1 component and the same V1 component, when locations, in the initial YUV image, of the U1 component and the V1 component that correspond to the pixel Y1, the pixel Y2, the pixel Y5, and the pixel Y6 need to be determined, the following formula may be used:

$$
\left\{
\begin{array}{l}
temp1 = Y11_x + Y12_x + Y21_x + Y22_x \\[6pt]
temp2 = Y11_y + Y12_y + Y21_y + Y22_y \\[6pt]
k = \dfrac{temp2}{4} \Big/ src_h \\[10pt]
\quad U_{1x} = \dfrac{temp1}{4} \\[10pt]
\quad U_{1y} = src_h + \dfrac{src_h}{2} * k \\[8pt]
\quad V_{1x} = U_{1x} + 1 \\[8pt]
\quad V_{1y} = src_h + \dfrac{src_h}{2} * k
\end{array}
\right.
$$

$Y11_x$ represents a horizontal coordinate value, of the pixel Y1, in the initial RGB image, $Y12_x$ represents a horizontal coordinate value, of the pixel Y2, in the initial RGB image, $Y21_x$ represents a horizontal coordinate value, of the pixel Y5, in the initial RGB image, and $Y22_x$ represents a horizontal coordinate value, of the pixel Y6, in the initial RGB image. $Y11_y$ represents a vertical coordinate value, of the pixel Y1, in the initial RGB image, $Y12_x$ represents a vertical coordinate value, of the pixel Y2, in the initial RGB image, $Y21_x$ represents a vertical coordinate value, of the pixel Y5, in the initial RGB image, and $Y22_y$ represents a vertical coordinate value, of the pixel Y6, in the initial RGB image. $U_{1x}$ represents a horizontal coordinate value, of each of the pixel Y1, the pixel Y2, the pixel Y5, and the pixel Y6, in the U-channel image corresponding to the initial YUV image. $U_{1y}$ represents a vertical coordinate value, of each of the pixel Y1, the pixel Y2, the pixel Y5, and the pixel Y6, in the U-channel image corresponding to the initial YUV image. $V_{1x}$ represents a horizontal coordinate value, of each of the pixel Y1, the pixel Y2, the pixel Y5, and the pixel Y6, in the V-channel image corresponding to the initial YUV image. $V_{1y}$ represents a vertical coordinate value, of each of the pixel Y1, the pixel Y2, the pixel Y5, and the pixel Y6, in the V-channel image corresponding to the initial YUV image. $src_h$ represents a height of the initial RGB image.

It should be understood that, because a U-component and a Y-component that correspond to packed storage are interleaved for storage, when a location of the U-component and a location of the V-component that are calculated based on the foregoing mapping relationship are floating-point values, there may be a deviation to some degree when the values are quantified. In addition, because a value difference between the U-component and the V-component is relatively large, the deviation causes a large image output error. In view of this, in embodiments of this application, FIG. 7 is used as an example to describe a method in this application for solving a pixel value of a U-component, in an initial YUV image, corresponding to a first pixel when a horizontal coordinate value and/or a vertical coordinate value of the U-component, in the initial YUV image, corresponding to the first pixel are/is floating-point value/values.

As shown in FIG. 7, a V1 component is included between a U1 component and a U2 component, and a V2 component is included between a U3 component and a U4 component. A location of a black circle represents a location, obtained according to a YUV mapping table, of the U-component, in the initial YUV image, corresponding to the first pixel in a target YUV image. In this embodiment, the following formula may be used:

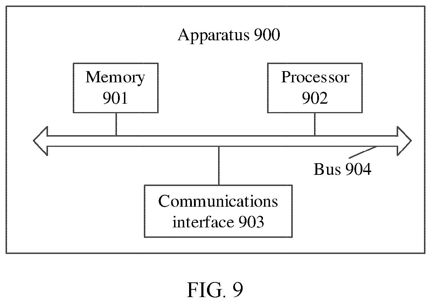

$$
\begin{aligned}
f(x,y) = {} & \frac{f(U_1)}{(U_{2x}-U_{1x})(U_{4y}-U_{3y})} * (U_{2x}-x)(U_{4y}-y) + \frac{f(U_2)}{(U_{2x}-U_{1x})(U_{4y}-U_{3y})} * (x-U_{1x})(U_{4y}-y) \\[6pt]
& + \frac{f(U3)}{(U_{2x}-U_{1x})(U_{4y}-U_{3y})} * (U_{2x}-x)(y-U_{3y}) + \frac{f(U_4)}{(U_{2x}-U_{1x})(U_{4y}-U_{3y})} * (x-U_{1x})(y-U_{3y})
\end{aligned}
$$,

to obtain the pixel value of the U-component, in the initial YUV image, corresponding to the first pixel.

x represents the horizontal coordinate value of the U-component, in the initial YUV image, corresponding to the first pixel, y represents the vertical coordinate value of the U-component, in the initial YUV image, corresponding to the first pixel. $f(x, y)$ represents the pixel value of the U-component, in the initial YUV image, corresponding to the first pixel. $U1$, $U2$, $U3$, and $U4$ are locations of four U-components in the initial YUV image that are closest to a point corresponding to a location represented by (x, y). $f(U_1)$ represents a pixel value at $U_1$, $f(U_2)$ represents a pixel value at $U_2$, $f(U_3)$ represents a pixel value at $U_3$, and $f(U_4)$ represents a pixel value at $U_4$.

It should be noted herein that, the foregoing merely describes how the pixel value of the U-component, in the initial YUV image, corresponding to the first pixel is solved when the horizontal coordinate value and/or the vertical coordinate value, in the U-channel image corresponding to the initial YUV image, of the first pixel are/is floating-point value/values. It should be understood that, when the horizontal coordinate value and/or the vertical coordinate value, in the V-channel image corresponding to the initial YUV image, of the first pixel are/is floating-point value/values, same conception as that for solving the pixel value of the U-component, in the initial YUV image, corresponding to the first pixel may be used. Details are not described herein again.

The solutions provided in embodiments of this application are mainly described above. A person skilled in the art should be easily aware that algorithms and steps in the examples described with reference to embodiments disclosed in this specification can be implemented in a form of hardware or a combination of hardware and computer software in this application. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

In embodiments of this application, functional modules of each device may be divided according to the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into the modules is an example and is merely logical function division, and may be other division in an actual implementation.

When each functional module is obtained through division based on each corresponding function, FIG. 8 is a schematic diagram of a structure of an image processing apparatus according to an embodiment of this application. As shown in FIG. 8, the apparatus 800 includes an obtaining module 801 and a processing module 802.

The obtaining module 801 is configured to: obtain a first YUV image, and obtain a YUV mapping relationship, where the YUV mapping relationship indicates a location mapping relationship between a pixel in an initial YUV image and each pixel in a target YUV image, and the target YUV image is an image obtained by undistorting the initial YUV image. The processing module 802 is configured to obtain a second YUV image based on the YUV mapping relationship and the first YUV image.

In a possible implementation, the obtaining module 801 is further configured to obtain an RGB mapping relationship, where the RGB mapping relationship indicates a location mapping relationship between a pixel in an initial RGB image and each pixel in a target RGB image, the initial RGB image is an image obtained by converting the initial YUV image into an RGB image, the target RGB image is an image obtained by undistorting the initial RGB image, and a size of the target RGB image is equal to a size of the target YUV image. The processing module 802 is further configured to determine the YUV mapping relationship based on the RGB mapping relationship.

In a possible implementation, the processing module 802 is further configured to: determine a first target mapping relationship based on the RGB mapping relationship, where the first target mapping relationship indicates a location, in a Y-channel image corresponding to the initial YUV image, of each pixel in the target YUV image; determine a second target mapping relationship based on the RGB mapping relationship, where the second target mapping relationship indicates a location, in a U-channel image corresponding to the initial YUV image, of each pixel in the target image; and determine a third target mapping relationship based on the RGB mapping relationship, where the third target mapping relationship indicates a location, in a V-channel image corresponding to the initial YUV image, of each pixel in the target image; and correspondingly, the processing module 802 is further configured to determine a pixel value of each pixel in the second YUV image based on a pixel value of each pixel at a location in a Y-channel image corresponding to the first YUV image, a pixel value of each pixel at a location in a U-channel image corresponding to the first YUV image, and a pixel value of each pixel at a location in a V-channel image corresponding to the first YUV image.

In a possible implementation, the first target mapping relationship is the same as the RGB mapping relationship; and correspondingly, the processing module 802 is further configured to: determine, based on the RGB mapping relationship, a horizontal coordinate value and a vertical coordinate value, in the U-channel image corresponding to the initial YUV image, of a first pixel in the target YUV image, where the first pixel is any pixel in all pixels; and determine, based on the RGB mapping relationship, a horizontal coordinate value and a vertical coordinate value, of the first pixel, in the V-channel image corresponding to the initial YUV image.

In a possible implementation, a sampling frequency of a Y-component, a sampling frequency of a U-component, and a sampling frequency of a V-component that are of the first YUV image satisfy a relationship of 4:2:0, and a manner of storing the first YUV image is planar storage.

In a possible implementation, the processing module 802 is further configured to: determine, according to a

formula $U_x = \dfrac{temp1}{4}/2$, the horizontal coordinate value, of the first pixel, in the U-channel image corresponding to the initial YUV image, where *temp*1 represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; and determine, according to a formula

$$U_y = src_h + \frac{src_h}{4} * k$$

, the vertical coordinate value, of the first pixel, in the U-channel image corresponding to the

$$k = \frac{temp2}{4} / src_h$$

initial YUV image, where $src_h$ represents a height of the initial YUV image, k represents a ratio, , and *tempi* represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and correspondingly, the processing module 802 is

$$V_x = \frac{temp1}{4} / 2$$

further configured to: determine, according to a formula , the horizontal coordinate value, of the first pixel, in the V-channel image corresponding to the first image; and determine, according to a formula

$$V_y = src_h * \frac{5}{4} + \frac{src_h}{4} * k$$

, the vertical coordinate value, of the first pixel, in the V-channel image corresponding to the first image.

In a possible implementation, a sampling frequency of a Y-component, a sampling frequency of a U-component, and a sampling frequency of a V-component that are of the first YUV image satisfy a relationship of 4:2:0, and a manner of storing the first YUV image is packed storage.

In a possible implementation, the processing module 802 is further configured to: determine, according to a

$$U_x = \frac{temp1}{4}$$

formula , the horizontal coordinate value, of the first pixel, in the U-channel image corresponding to the initial YUV image, where *temp*1 represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; and determine, according to a formula

$$U_y = src_h + \frac{src_h}{2} * k$$

, the vertical coordinate value, of the first pixel, in the U-channel image corresponding to the

$$k = \frac{temp2}{4} / src_h$$

initial YUV image, where $src_h$ represents a height of the initial YUV image, k represents a ratio, , and *tempi* represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and correspondingly, the processing module 802 is further configured to: determine, according to a formula $V_x = U_x + 1$, the horizontal coordinate value, of the first pixel, in the

$$V_y = src_h + \frac{src_h}{2} * k$$

V-channel image corresponding to the initial YUV image; and determine, according to a formula , the vertical coordinate value, of the first pixel, in the V-channel image corresponding to the initial YUV image.

FIG. 9 is a schematic diagram of a structure of an image processing apparatus according to another embodiment of this application. The apparatus shown in FIG. 9 may be configured to perform the image processing method according to any one of the foregoing embodiments.

As shown in FIG. 9, an apparatus 900 in this embodiment includes a memory 901, a processor 902, a communications interface 903, and a bus 904. A communication connection between the memory 901, the processor 902, and the communications interface 903 is implemented by using the bus 904.

The memory 901 may be a read only memory (read only memory, ROM), a static storage device, a dynamic storage device, or a random access memory (random access memory, RAM). The memory 901 may store a program. When the program stored in the memory 901 is executed by the processor 902, the processor 902 is configured to perform the steps in the method shown in FIG. 4.

The processor 902 may be a general-purpose central processing unit (central processing unit, CPU), a microprocessor, an application-specific integrated circuit (application-specific integrated circuit, ASIC), or one or more integrated circuits, and is configured to execute a related program to implement the method according to embodiments of this application.

The processor 902 may be an integrated circuit chip that has a signal processing capability. During implementation, the steps in the method according to embodiments of this application may be implemented by using a hardware integrated logic circuit in the processor 902 or instructions in a form of software.

Alternatively, the processor 902 may be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor 902 may implement or perform the method, steps, and logic block diagrams disclosed in embodiments of this application. The general-purpose processor may be a microprocessor, or the processor may be any conventional processor or the like.

The steps in the method disclosed with reference to embodiments of this application may be directly presented as being performed and completed by a hardware decoding processor, or performed and completed by a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 901. The processor 902 reads information in the memory 901 and completes, in combination with hardware of the processor 902, a function that is to be performed by a unit included in the temperature measurement apparatus in this application, for example, may perform steps/functions in the embodiment shown in FIG. 4.

The communications interface 903 may use, but not limited to, a transceiver apparatus, for example, a transceiver, to implement communication between the apparatus 900 and another device or communications network.

The bus 904 may include a path for transmitting information between various components (for example, the memory 901, the processor 902, and the communications interface 903) of the apparatus 900.

It should be understood that the apparatus 900 shown in this embodiment of this application may be an electronic device, or may be a chip configured in the electronic device.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through examples but not limitative descriptions, random access memories (random access memory, RAM) in many forms are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or another combination thereof. When software is used for implementation, all or some of the foregoing embodiments may be implemented in a form of a computer program product. The computer program product includes one or more computer instructions or computer programs. When the computer instructions or the computer program is loaded and executed on a computer, the procedures or functions according to embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, via infrared, radio, or microwaves) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium, or the like. The semiconductor medium may be a solid state drive.

It should be understood that the term "and/or" in this specification describes only an association relationship for describing associated objects and represents that three relationships may exist. For example, A and/or B may represent the following three cases: Only A exists, both A and B exist, and only B exists. A and B may be single or plural. In addition, the character "/" in this specification usually indicates an "or" relationship between associated objects, but may alternatively indicate an "and/or" relationship. A specific meaning can be understood based on the context.

In this application, "at least one" means one or more, and "plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, or c; a and b; a and c; b and c; or a, b, and c, where a, b, or c may be singular or plural.

It should be understood that sequence numbers of the processes in the foregoing embodiments of this application do not mean a sequence for performing. The sequence for performing the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It can be clearly understood by a person skilled in the art that, for convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling, direct coupling, or communication connection may be implemented through some interfaces. The indirect coupling or the communication connection between the apparatuses or units may be implemented in electronic, mechanical, or another form.

The units described as separate parts may or may not be physically separate, and parts displayed as units may or may not be physical units, and may have one location, or may be distributed over a plurality of network units. All or some of the units may be selected based on an actual requirement, to achieve the objectives of the solutions of embodiments.

In addition, the functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (that may be a personal computer, a server, or a network device) to perform all or some of the steps in the method described in embodiments of this application. The foregoing storage medium includes any medium that can store program code, for example, a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An image processing method, comprising:

   obtaining a first YUV image;
   obtaining a YUV mapping relationship, wherein the YUV mapping relationship indicates a location mapping relationship between a pixel in an initial YUV image and each pixel in a target YUV image, and the target YUV image is an image obtained by undistorting the initial YUV image; and

obtaining a second YUV image based on the YUV mapping relationship and the first YUV image.

2. The method according to claim 1, wherein the obtaining a YUV mapping relationship comprises:

obtaining an RGB mapping relationship, wherein the RGB mapping relationship indicates a location mapping relationship between a pixel in an initial RGB image and each pixel in a target RGB image, the initial RGB image is an image obtained by converting the initial YUV image into an RGB image, the target RGB image is an image obtained by undistorting the initial RGB image, and a size of the target RGB image is equal to a size of the target YUV image; and

determining the YUV mapping relationship based on the RGB mapping relationship.

3. The method according to claim 2, wherein the determining the YUV mapping relationship based on the RGB mapping relationship comprises:

determining a first target mapping relationship based on the RGB mapping relationship, wherein the first target mapping relationship indicates a location, in a Y-channel image corresponding to the initial YUV image, of each pixel in the target YUV image;

determining a second target mapping relationship based on the RGB mapping relationship, wherein the second target mapping relationship indicates a location, in a U-channel image corresponding to the initial YUV image, of each pixel in the target image; and

determining a third target mapping relationship based on the RGB mapping relationship, wherein the third target mapping relationship indicates a location, in a V-channel image corresponding to the initial YUV image, of each pixel in the target image; and

correspondingly, the obtaining a second YUV image based on the YUV mapping relationship and the first YUV image comprises:

determining a pixel value of each pixel in the second YUV image based on a pixel value of each pixel at a location in a Y-channel image corresponding to the first YUV image, a pixel value of each pixel at a location in a U-channel image corresponding to the first YUV image, and a pixel value of each pixel at a location in a V-channel image corresponding to the first YUV image.

4. The method according to claim 3, wherein the first target mapping relationship is the same as the RGB mapping relationship;

correspondingly, the determining a second target mapping relationship based on the RGB mapping relationship comprises:

determining, based on the RGB mapping relationship, a horizontal coordinate value and a vertical coordinate value, in the U-channel image corresponding to the initial YUV image, of a first pixel in the target YUV image, wherein the first pixel is any pixel in all pixels; and

correspondingly, the determining a third target mapping relationship based on the RGB mapping relationship comprises:

determining, based on the RGB mapping relationship, a horizontal coordinate value and a vertical coordinate value, of the first pixel, in the V-channel image corresponding to the initial YUV image.

5. The method according to any one of claims 1 to 4, wherein a sampling frequency of a Y-component, a sampling frequency of a U-component, and a sampling frequency of a V-component that are of the first YUV image satisfy a relationship of 4:2:0, and a manner of storing the first YUV image is planar storage.

6. The method according to claim 5, wherein the determining a horizontal coordinate value and a vertical coordinate value, in the U-channel image corresponding to the initial YUV image, of a first pixel in the target YUV image comprises:

$$U_x = \frac{temp1}{4} / 2$$

determining, according to a formula , the horizontal coordinate value, of the first pixel, in the U-channel image corresponding to the initial YUV image, wherein $temp1$ represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; and

determining, according to a formula $U_y = src_h + \dfrac{src_h}{4} * k$, the vertical coordinate value, of the first pixel, in the U-channel image corresponding to the initial YUV image, wherein $src_h$ represents a height of the initial YUV image, k represents a ratio, $k = \dfrac{temp2}{4} / src_h$, and $tempi$ represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and

correspondingly, the determining a horizontal coordinate value and a vertical coordinate value, of the first pixel, in the V-channel image corresponding to the initial YUV image comprises:

determining, according to a formula $V_x = \dfrac{temp1}{4} / 2$, the horizontal coordinate value, of the first pixel, in the V-channel image corresponding to the first image; and

determining, according to a formula $V_y = src_h * \dfrac{5}{4} + \dfrac{src_h}{4} * k$, the vertical coordinate value, of the first pixel, in the V-channel image corresponding to the first image.

7. The method according to any one of claims 1 to 4, wherein a sampling frequency of a Y-component, a sampling frequency of a U-component, and a sampling frequency of a V-component that are of the first YUV image satisfy a relationship of 4:2:0, and a manner of storing the first YUV image is packed storage.

8. The method according to claim 7, wherein the determining a horizontal coordinate value and a vertical coordinate value, in the U-channel image corresponding to the initial YUV image, of a first pixel in the target YUV image comprises:

determining, according to a formula $U_x = \dfrac{temp1}{4}$, the horizontal coordinate value, of the first pixel, in the U-channel image corresponding to the initial YUV image, wherein $temp1$ represents a sum of a horizontal coordinate value, of the first pixel, in the initial RGB image, a horizontal coordinate value, of a second pixel, in the initial RGB image, a horizontal coordinate value, of a third pixel, in the initial RGB image, and a horizontal coordinate value, of a fourth pixel, in the initial RGB image, and the second pixel, the third pixel, and the fourth pixel are adjacent to the first pixel; and

determining, according to a formula $U_y = src_h + \dfrac{src_h}{2} * k$, the vertical coordinate value, of the first pixel, in the U-channel image corresponding to the initial YUV image, wherein $src_h$ represents a height of the initial YUV image, k represents a ratio, $k = \dfrac{temp2}{4} / src_h$, and $tempi$ represents a sum of a vertical coordinate value, of the first pixel, in the initial RGB image, a vertical coordinate value, of the second pixel, in the initial RGB image, a vertical coordinate value, of the third pixel, in the initial RGB image, and a vertical coordinate value, of the fourth pixel, in the initial RGB image; and

correspondingly, the determining a horizontal coordinate value and a vertical coordinate value, of the first pixel, in the V-channel image corresponding to the initial YUV image comprises:

determining, according to a formula $V_x = U_x + 1$, the horizontal coordinate value, of the first pixel, in the V-channel image corresponding to the initial YUV image; and

$$V_y = src_h + \frac{src_h}{2} * k$$

determining, according to a formula , the vertical coordinate value, of the first pixel, in the V-channel image corresponding to the initial YUV image.

9. An image processing apparatus, wherein the apparatus comprises a functional module configured to perform the method according to any one of claims 1 to 8.

10. A computing platform, comprising the image processing apparatus according to claim 9.

11. A mobile device, wherein the mobile device comprises the computing platform according to claim 10.

12. The device according to claim 11, wherein the mobile device comprises an autonomous vehicle.

13. An image processing apparatus, comprising a memory and a processor, wherein

the memory is configured to store program instructions; and
the processor is configured to invoke the program instructions in the memory to perform the image processing method according to any one of claims 1 to 8.

14. A chip, comprising at least one processor and a communications interface, wherein the communications interface and the at least one processor are interconnected through a line, and the at least one processor is configured to run a computer program or instructions to perform the method according to any one of claims 1 to 8.

15. A computer-readable storage medium, wherein the computer-readable medium stores program code to be executed by a computer, and the program code comprises instructions for performing the method according to any one of claims 1 to 8.

16. A computer program product, wherein the computer program product comprises computer program code, and when the computer program code is run on a computer, the computer is enabled to implement the method according to any one of claims 1 to 8.

FIG. 1

FIG. 2

FIG. 3

S401: Obtain a first YUV image

S402: Obtain a YUV mapping relationship, where the YUV mapping relationship indicates a location mapping relationship between a pixel in an initial YUV image and each pixel in a target YUV image, and the target YUV image is an image obtained by undistorting the initial YUV image

S403: Obtain a second YUV image based on the YUV mapping relationship and the first YUV image

FIG. 4

| R1 | R2 | R3 | R4 |
| R5 | R6 | R7 | R8 |
| R9 | R10 | R11 | R12 |
| R13 | R14 | R15 | R16 |
| G1 | G2 | G3 | G4 |
| G5 | G6 | G7 | G8 |
| G9 | G10 | G11 | G12 |
| G13 | G14 | G15 | G16 |
| B1 | B2 | B3 | B4 |
| B5 | B6 | B7 | B8 |
| B9 | B10 | B11 | B12 |
| B13 | B14 | B15 | B16 |

FIG. 5

| $src_h$ | Y1 | Y2 | Y3 | Y4 |
|---|---|---|---|---|
| | Y5 | Y6 | Y7 | Y8 |
| | Y9 | Y10 | Y11 | Y12 |
| | Y13 | Y14 | Y15 | Y16 |
| | U1 | U2 | U3 | U4 |
| | V1 | V2 | V3 | V4 |

(a)

| $src_h$ | Y1 | Y2 | Y3 | Y4 |
|---|---|---|---|---|
| | Y5 | Y6 | Y7 | Y8 |
| | Y9 | Y10 | Y11 | Y12 |
| | Y13 | Y14 | Y15 | Y16 |
| | U1 | V1 | U2 | V2 |
| | U3 | V3 | U4 | V4 |

(b)

FIG. 6

U1          V1          U2

U3          V2          U4

FIG. 7

Apparatus 800

Obtaining module 801

Processing module 802

FIG. 8

Apparatus 900

Memory 901

Processor 902

Bus 904

Communications interface 903

FIG. 9

## INTERNATIONAL SEARCH REPORT

| International application No. |
| --- |
| **PCT/CN2022/082406** |

**A. CLASSIFICATION OF SUBJECT MATTER**

G06T 5/00(2006.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNTXT, CNABS, ENTXT, ENTXTC, DWPI, CNKI: 图像, 畸变, 校正, YUV, RGB, 映射, 像素, 位置, image, distortion, correct, map, pixel, position

**C. DOCUMENTS CONSIDERED TO BE RELEVANT**

| Category* | Citation of document, with indication, where appropriate, of the relevant passages | Relevant to claim No. |
| --- | --- | --- |
| X | CN 109712087 A (T2MOBILE(SHANGHAI) CO., LTD.) 03 May 2019 (2019-05-03) description, paragraphs 7-50 | 1, 5, 7, 9-16 |
| A | CN 109712087 A (T2MOBILE(SHANGHAI) CO., LTD.) 03 May 2019 (2019-05-03) entire document | 2-4, 6, 8 |
| X | CN 110599427 A (TP-LINK TECHNOLOGIES CO., LTD.) 20 December 2019 (2019-12-20) description, paragraphs 40-110 | 1, 5, 7, 9-16 |
| A | CN 110599427 A (TP-LINK TECHNOLOGIES CO., LTD.) 20 December 2019 (2019-12-20) entire document | 2-4, 6, 8 |
| A | JP H11250240 A (KYOCERA CORP.) 17 September 1999 (1999-09-17) entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 December 2022** | **26 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/082406**

| Patent document cited in search report | | | Publication date (day/month/year) | Patent family member(s) | Publication date (day/month/year) |
|---|---|---|---|---|---|
| CN | 109712087 | A | 03 May 2019 | None | |
| CN | 110599427 | A | 20 December 2019 | None | |
| JP | H11250240 | A | 17 September 1999 | None | |

Form PCT/ISA/210 (patent family annex) (January 2015)